# EUROPÄISCHE PATENTSCHRIFT

(11) **EP 3 826 226 B1**
(45) Veröffentlichungstag und Bekanntmachung des Hinweises auf die Patenterteilung: **19.03.2025**
(21) Anmeldenummer: 20203767.7
(22) Anmeldetag: 26.10.2020
(51) Int. Cl.: H04L 9/32, G06F 21/64, B61L 3/00, B61L 15/00, B61L 27/00, G07C 5/00, G07C 5/08, H04W 4/42

(54) **VERFAHREN ZUR FAHRTENREGISTRIERUNG FÜR EINE EISENBAHNTECHNISCHE ANLAGE UND REGISTRIERUNGSTEILNEHMER**
METHOD OF REGISTERING TRAVEL FOR RAILWAY SYSTEM AND REGISTRATION PARTICIPANT
PROCÉDÉ D'ENREGISTREMENT DE TRAJETS POUR UNE INSTALLATION TECHNIQUE FERROVIAIRE ET PARTICIPANT D'ENREGISTREMENT

(30) Priorität: 19.11.2019 DE 102019217808
(43) Veröffentlichungstag der Anmeldung: 26.05.2021
(73) Patentinhaber: Siemens Mobility GmbH, 81739 München (DE)
(72) Erfinder: Braband, Jens, 38106 Braunschweig (DE)
(74) Vertreter: Siemens Patent Attorneys

(56) Entgegenhaltungen:
- EP-A2- 0 177 690
- EP-B1- 0 177 690
- DE-A1- 102018 205 917
- US-A1- 2014 052 315

## Beschreibung

In der Eisenbahntechnik werden mittlerweile Fahrtenregistrierungseinrichtungen verwendet, wie sie beispielsweise aus der Luftfahrt unter der Bezeichnung Blackbox bereits seit Langem üblich sind. Solche Fahrtenregistrierungseinrichtungen werden teilweise auch als Data Logger oder Juridical Recorder bezeichnet. Insbesondere vor dem Hintergrund der immer stärkeren Modularisierung bzw. der Verwendung von Komponenten verschiedenster Hersteller in einer eisenbahntechnischen Anlage ist der Einsatz solcher Fahrtenregistrierungseinrichtungen sinnvoll, da deren Aufzeichnungen und Einträge unbestreitbar ausgestaltet sind. Auch durch eine zunehmende Anzahl von Hackerangriffen kann die Audittierbarkeit mittels solcher Fahrtenregistrierungseinrichtungen wichtig sein. Problematisch kann es bei Fahrtenregistrierungseinrichtungen sein, wenn deren Aufzeichnungen nicht vertrauenswürdig, sondern nachträglich manipulierbar sind. Ein weiteres Problem kann auftreten, wenn die Fahrtenregistrierungseinrichtung z.B. bei einem Unfall eines Fahrzeugs zerstört und die Daten verloren sind.

Aus der US 2014/0052315 A1 ist ein Datenrekorder für einen Zug mit paralleler fahrzeugexterner Datenspeicherung bekannt. Die EP 0 177 690 A2 beschreibt ein Verfahren zur Fehlerkorrektur und die DE 10 2018 205 917 A1 eine Vorrichtung zur Vervielfältigung und Sicherung von Daten eines Fahrtenregistriersystems.

Es ist daher die Aufgabe der vorliegenden Erfindung, ein Verfahren zur Fahrtenregistrierung für eine eisenbahntechnische Anlage und ein Registrierungsteilnehmer für eine Fahrtenregistrierungseinrichtung bereitzustellen, deren Aufzeichnungen auch bei einem Unfall eines Fahrzeugs sicher sind.

Erfindungsgemäß wird die Aufgabe gelöst durch ein Verfahren nach Patentanspruch 1 zur Fahrtenregistrierung für eine eisenbahntechnische Anlage, bei dem gleichzeitig von mehreren Registrierungsteilnehmern jeweils Daten der eisenbahntechnischen Anlage über einen vorbestimmten Zeitraum ausgelesen und jeweils wenigstens ein Datenpaket aus den Daten und/oder wenigstens ein Hash-Wert des Datenpaketes erstellt werden, bei dem die Datenpakete
und/oder die Hash-Werte jeweils mittels Feldbuskommunikation zwischen den Registrierungsteilnehmern ausgetauscht werden und die von unterschiedlichen Registrierungsteilnehmern erstellten Datenpakete und/oder deren Hash-Wert miteinander verglichen werden.

Weiterhin wird die Aufgabe erfindungsgemäß gelöst durch einen Registrierungsteilnehmer nach Anspruch 10 für eine Fahrtenregistrierungseinrichtung eine eisenbahntechnische Anlage,
mit wenigstens einer Ausleseeinrichtung, die zum Auslesen von Daten der eisenbahntechnischen Anlage über einen vorbestimmten Zeitraum ausgebildet ist,
mit wenigstens einer Verarbeitungseinrichtung, die zum Erstellen wenigstens eines Datenpaketes aus den Daten und/oder wenigstens eines Hash-Werts des Datenpaketes ausgebildet ist, mit wenigstens eine Kopplungseinrichtung, die zum Austausch der Datenpakete und/oder die Hash-Werte mittels Feldbuskommunikation ausgebildet ist, und
mit wenigstens einer Vergleichseinrichtung, die zum Vergleichen der von unterschiedlichen Registrierungsteilnehmern erstellten Datenpaketen und/oder deren Hash-Werten ausgebildet ist.

Durch die erfindungsgemäße Verwendung von mehreren Registrierungsteilnehmern ist sichergestellt, dass bei einer Zerstörung eines Registrierungsteilnehmers, beispielsweise durch einen Unfall mit einem Schienenfahrzeug der Anlage, weitere Registrierungsteilnehmer mit den aufgezeichneten Daten vorhanden sind. Hierfür ist der Datenstand auf allen Registrierungsteilnehmern sicherzustellen. Jeder Registrierungsteilnehmer liest vorbestimmte Daten der eisenbahntechnischen Anlage, die im Wesentlichen frei bestimmt werden können, über einen vorbestimmten Zeitpunkt aus. Aus diesen gesammelten Daten wird ein Datenpaket erstellt und abgespeichert. Zusätzlich oder alternativ kann auch ein Hash-Wert des Datenpakets erstellt werden. Erfindungsgemäß werden die Datenpakete und/oder die Hash-Werte mittels Feldbuskommunikation zwischen den Registrierungsteilnehmern ausgetauscht. Die Feldbuskommunikation hat hierbei den Vorteil, dass die Daten sehr schnell und auf einfache Weise ausgetauscht werden können. Schließlich werden die von unterschiedlichen Registrierungsteilnehmern erstellten Datenpakete und/oder deren Hash-Werte miteinander verglichen. Dies hat den Vorteil, dass Unterschiede sehr schnell aufgedeckt werden können und ansonsten ein gleicher Datenstand auf allen Registrierungsteilnehmern garantiert werden kann. Die eisenbahntechnische Anlage umfasste bekannte Komponenten, wie z.B. Schienenfahrzeuge, Stellwerke, Leitstellen oder Feldelemente, deren Daten erfasst werden können. Die Daten sind beispielsweise Fahrzeugdaten, aber auch Daten von Feldelementen, eingestellte Fahrstraßen etc.

Die erfindungsgemäße Lösung kann durch vorteilhafte Ausgestaltungen weiterentwickelt werden, die im Folgenden beschrieben sind.

So können in einer vorteilhaften Ausgestaltung des erfindungsgemäßen Verfahrens das Datenpaket und/oder der Hash-Wert des Datenpakets von den Registrierungsteilnehmern jeweils signiert werden, insbesondere mit einem zugeordneten privaten Schlüssel einer PKI - Public-Key-Infrastruktur. Dies hat den Vorteil, dass eindeutig identifizierbar ist, von wem das Datenpaket bzw. dessen Hash-Wert stammt. Dabei bietet sich das Signieren mit PKI, also mit dem privaten Schlüssel der Public-Key-Infrastruktur an, weil diese sehr verbreitet und fälschungssicher ist. Die PKI kann durch eine zentrale Autorität zertifiziert sein.

Um Fehler einzelner Registrierungsteilnehmer sehr schnell aufdecken zu können, werden die Datenpakete und/oder die Hash-Werte verschiedener Registrierungsteilnehmer des gleichen Zeitraums erfindungsgemäß auf Übereinstimmung geprüft. Ziel ist es, dass auch allen Registrierungsteilnehmern der gleiche Datenstand mit den gleichen Datenpaketen vorliegt. Wenn die Datenpakete bzw. deren Hash-Werte übereinstimmen, ist dies der Fall.

Weiterhin kann eine Einigung durchgeführt werden, wenn die Datenpakete und/oder die Hash-Werte verschiedener Registrierungsteilnehmer des gleichen Zeitraums voneinander abweichen. Dies hat den Vorteil, dass auch bei Abweichungen zwischen den unterschiedlichen Registrierungsteilnehmern innerhalb einer absehbaren Zeit wieder der gleiche Datenstand hergestellt wird.

Beispielsweise kann die Einigung bei unterschiedlichen Daten dadurch erzielt werden, dass die Datenpakete und/oder die Hash-Werte einer Mehrheit oder qualifizierten Mehrheit der Registrierungsteilnehmer für alle Registrierungsteilnehmer übernommen werden. Unter einer qualifizierten Mehrheit wird hier ein zuvor festgelegter Anteil von Registrierungsteilnehmern angesehen. Dies können 50%, aber auch durchaus ein höherer Prozentsatz sein. Alternativ oder wenn keine qualifizierte Mehrheit vorhanden ist, kann die Einigung durch ein vorbestimmtes Ereignisprotokoll erzielt werden, das mittels der Feldbuskommunikation durchgeführt wird. Solche Einigungsprotokolle sind allgemein bekannt und umfassen beispielsweise Einigungsalgorithmen, mit denen Unstimmigkeiten beseitigt werden können. Solche Algorithmen sind aus verteilten Datenbanken oder Fehlertoleranzanwendungen bekannt. So kann eine Einigung nach einigen Zyklen der Feldbuskommunikation erreicht werden, deterministisch oder auch statistisch.

Um fehlerhafte Registrierungsteilnehmer erkennen zu können, werden erfindungsgemäß Registrierungsteilnehmer, deren Datenpakete und/oder Hash-Werte mit denen der übrigen Registrierungsteilnehmer nicht übereinstimmen, markiert. Stimmen die Daten wiederholt nicht überein, werden solche Registrierungsteilnehmer erfindungsgemäß ausgeschlossen.

Weiterhin können die Datenpakete und/oder die Hash-Werte mittels Feldbuskommunikation im Wesentlichen in Echtzeit ausgetauscht werden. Dies hat den Vorteil, dass eine quasi zeitgleiche Abstimmung zwischen den Registrierungsteilnehmern stattfindet. So ist sichergestellt, dass die Registrierungsteilnehmer entweder alle den gleichen Datenstand haben oder zumindest eine Abweichung davon bekannt ist. Beispielsweise bei einem Unfall eines Schienenfahrzeugs kann so festgestellt werden, ob der Datenstand eines Registrierungsteilnehmers vertrauenswürdig ist.

In einer vorteilhaften Ausgestaltung kann der vorbestimmte Zeitraum, über den die Daten ausgelesen werden, größer oder gleich einem Übertragungszyklus der Feldbuskommunikation sein. Dies hat den Vorteil, dass die etablierte Feldbuskommunikation auf einfache Weise verwendet werden kann. Es kann auch vorteilhaft sein, Daten über zwei oder mehr Zyklen zu sammeln und erst dann neu zu übertragen.

Weiterhin kann jedem Registrierungsteilnehmer wenigstens ein Bereich in der Feldbuskommunikation fest zugeordnet sein. Dies hat den Vorteil, dass jedem Registrierungsteilnehmer bekannt ist, welchem anderen Registrierungsteilnehmer welcher Datenbereich zugeordnet ist. So sind die innerhalb der Feldbuskommunikation abgelegten Daten jeweils eindeutig einem Registrierungsteilnehmer zuordenbar.

Die Erfindung betrifft auch eine Fahrtenregistrierungseinrichtung für eine eisenbahntechnische Anlage, mit mehreren Registrierungsteilnehmern, die zum Auslesen von Fahrzeugdaten und zum zyklischen Erstellen von Datenpaketen aus den Fahrzeugdaten ausgebildet sind, mit wenigstens einer Feldbuskommunikationseinrichtung, durch die die Registrierungsteilnehmer miteinander verbunden sind, wobei wenigstens einige der Registrierungsteilnehmer gemäß der oben genannten Ausführung ausgebildet sind.

In einer vorteilhaften Ausgestaltung der erfindungsgemäßen Fahrtenregistrierungseinrichtung kann die Feldbuskommunikationseinrichtung echtzeitfähig ausgebildet sein. Dies hat den oben bereits genannten Vorteil der schnellen Synchronisierung.

Schließlich betrifft die Erfindung auch ein Schienenfahrzeug mit wenigstens einer erfindungsgemäßen Fahrtenregistrierungseinrichtung nach einer der zuvor genannten Ausführungsformen.

Im Folgenden wird die Erfindung mit Bezug auf die beigefügten Zeichnungen erläutert.

Es zeigen:
- Fig. 1: eine schematische Darstellung einer beispielhaften Ausführungsform eines erfindungsgemäßen Schienenfahrzeugs mit einer Fahrtenregistrierungseinrichtung;
- Fig. 2: eine schematische Darstellung einer Feldbuskommunikation in dem Schienenfahrzeug aus Fig. 1;
- Fig. 3: eine weitere schematische Darstellung der Feldbuskommunikation aus Fig. 2.

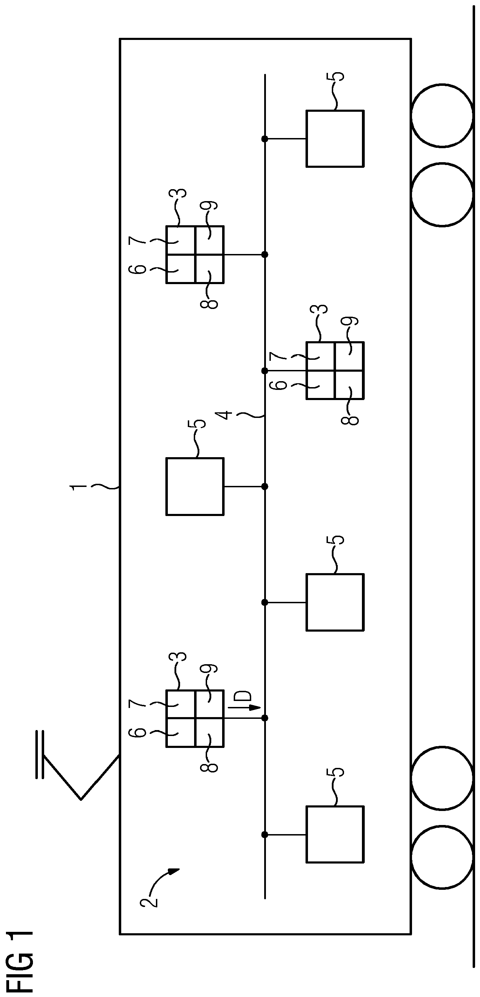

Eine beispielhafte Ausführungsform einer eisenbahntechnischen Anlage mit einem erfindungsgemäßen Schienenfahrzeugs 1, wie es in Fig. 1 dargestellt ist. Das Schienenfahrzeug 1 umfasst eine Fahrtenregistrierungseinrichtung 2 mit mehreren Registrierungsteilnehmern 3 und einer Feldbuskommunikationseinrichtung 4. Das Schienenfahrzeug 1 umfasst weiterhin eine Vielzahl von Komponenten 5, die an unterschiedlichsten Stellen im Schienenfahrzeug 1 angeordnet sind und verschiedenste Fahrzeugdaten liefern.

In den Figuren ist die Fahrtenregistrierungseinrichtung 2 als Teil des Schienenfahrzeugs 1 dargestellt und die ausgelesenen Daten sind hier ausschließlich Fahrzeugdaten. Alternativ oder zusätzlich kann die Fahrtenregistrierungseinrichtung 2 aber selbstverständlich auch andere Daten der eisenbahntechnischen Anlage auslesen, wie beispielsweise Daten von Stellwerken oder Feldelementen. Die Fahrtenregistrierungseinrichtung muss natürlich auch nicht im Schienenfahrzeug 2 angeordnet sein, sondern kann an beliebiger Stelle in der eisenbahntechnischen Anlage angeordnet sein.

Die Komponenten 5 sind bei der in Fig. 1 beispielhaft dargestellten Ausführungsform, wie auch die Registrierungsteilnehmer 3, mit der Feldbuskommunikationseinrichtung 4 verbunden. Die Komponenten 5 können beispielsweise eine ETCS-Onbroad-Unit, eine Fahrzeugsteuereinrichtung, eine Bremssteuereinrichtung, eine Odometrieeinrichtung oder ähnliches sein. Die Komponenten 5 übertragen verschiedenste Fahrzeugdaten mittels der Feldbuskommunikationseinrichtung 4 innerhalb des Schienenfahrzeugs 1. Fahrzeugdaten können beispielsweise jegliche Art von Fehlermeldungen, aber auch Geschwindigkeit, Beschleunigung, Position, aktuelle Bremskurven, Energieverbrauch, Außentemperatur, Fahrzeugtemperatur, etc. sein.

Die Registrierungsteilnehmer 3 sind jeweils zum Erfassen von aktuellen Fahrzeugdaten ausgebildet und können auch als verteilte Juridical Recorder oder Data Logger bezeichnet werden. Die Registrierungsteilnehmer 3 weisen jeweils eine Ausleseeinrichtung 6, eine Verarbeitungseinrichtung 7, eine Kopplungseinrichtung 8 und eine Vergleichseinrichtung 9 auf. Die Ausleseeinrichtung 6 ist zum Auslesen der Fahrzeugdaten des Schienenfahrzeugs 1 ausgebildet, wobei alle Registrierungsteilnehmer 3 die gleichen Fahrzeugdaten auslesen. Die Verarbeitungseinrichtung 7 ist zum Erstellen eines Datenpakets aus den Fahrzeugdaten ausgebildet. Auch die Struktur oder der Aufbau des Datenpakets D ist für alle Registrierungsteilnehmer 3 fest vorgegeben. Die Koppelungseinrichtung 8 verbindet den Registrierungsteilnehmer 3 mit der Feldbuskommunikationseinrichtung 4 und kann auch als Switch bezeichnet werden. Da bei der beispielhaften Ausführungsform in Fig. 1 die Komponenten 5 die Fahrzeugdaten jeweils per Feldbuskommunikation übermitteln und die Ausleseeinrichtung 6 die Fahrzeugdaten anschließend aus der Feldbuskommunikationseinrichtung 4 ausliest, können die Ausleseeinrichtung 6 und die Kopplungseinrichtung 8 auch zusammen ausgebildet sein. Die Vergleichseinrichtung 9 ist zum Vergleichen von Datenpaketen oder Hash-Werten ausgebildet, die von unterschiedlichen Registrierungsteilnehmern 3 erstellt worden sind, wie im Folgenden noch genauer beschrieben ist. Die Vergleichseinrichtung 9 kann auch zusammen mit der Verarbeitungseinrichtung 7 ausgebildet sein. Im einfachsten Fall können die Registrierungsteilnehmer 3 jeweils auch ein Computer mit Netzwerkschnittstelle, wie z.B. Ethernet, oder auch nur ein Teil eines Computers und die Ausleseeinrichtung 6, die Verarbeitungseinrichtung 7, die Kopplungseinrichtung 8 und die Vergleichseinrichtung 9 können zumindest teilweise in Software ausgebildet sein.

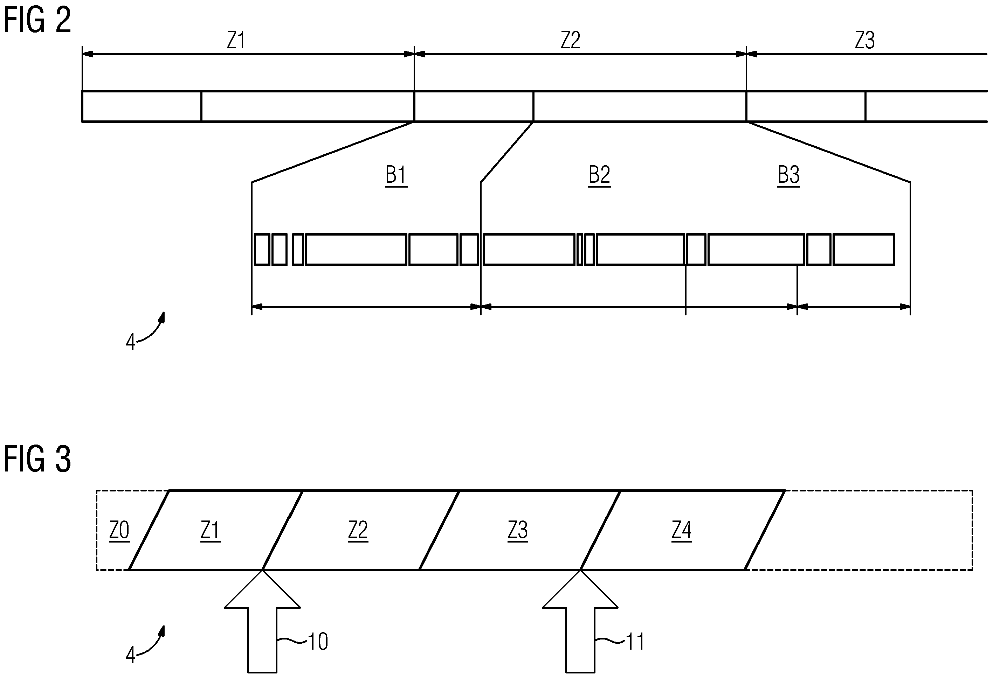

In Fig. 2 ist die Feldbuskommunikation der Feldbuskommunikationseinrichtung 4 aus Fig. 1 im Detail dargestellt. Feldbuskommunikationseinrichtungen dieser Art sind an sich bekannt. Im Prinzip wird darin die Zeit synchronisiert und in Übertragungszyklen z1, z2, z3 geteilt. Im Allgemeinen sind innerhalb jedes Übertragungszyklus z1, z2, z3 feste Bereiche oder Slots B1, B2, B3 für verschiedene Informationen reserviert, beispielsweise für Realtime-Nachrichten (B1 bzw. B2 je nach Priorität der Daten) und B3 für eine Standard-Kommunikation. Die Zyklus-Zeit ist in der beispielhaften Ausführung in Fig. 2 in ms angegeben und liegt typischerweise zwischen 50 und 500 ms, hier beispielsweise z=100 ms. Die Bereiche bzw. Teile davon sind Teilnehmern fest zugeordnet und jeder Teilnehmer kann alle Daten mitlesen, aber nur in seinem Bereich schreiben.

Im Folgenden ist beschrieben, wie das Verfahren zur Fahrtenregistrierung im Betrieb des Schienenfahrzeugs 1 abläuft.

Die Feldbuskommunikationseinrichtung 4 ist in an sich bekannter Weise ausgebildet und arbeitet beispielsweise nach dem Profinet-Standard. Sowohl die Registrierungsteilnehmer 3 als auch die Komponenten 5 sind Teilnehmer der Feldbuskommunikationseinrichtung 4 und mit dieser verbunden. Diese Teilnehmer haben jeweils einen fest zugeordneten Bereich, in dem sie Daten schreiben und somit mittels der Feldbuskommunikation übertragen können. Die Feldbuskommunikationseinrichtung 4 arbeitet in bekannter Weise zyklisch mit festgelegter Zykluszeit z, die bei der Ausführungsform in Fig. 1 beispielsweise z = 100 ms ist. Die Registrierungsteilnehmer 3 können zwar nur in einem bestimmten Bereich der Feldbuskommunikation schreiben, aber alle Bereiche können von ihnen gelesen werden. Dadurch können sowohl die von den Komponenten 5 übermittelten Fahrzeugdaten ausgelesen werden, aber auch Datenpakete von anderen Registrierungsteilnehmern 3.

Jeder Registrierungsteilnehmer 3 sammelt über eine festgesetzte Anzahl von Zyklen der Feldbuskommunikationseinrichtung 4 Fahrzeugdaten. Aus den mitgelesenen Fahrzeugdaten erstellt jeder Registrierungsteilnehmer 3 ein Datenpaket D mit einer vorbestimmten festen Datenstruktur. So sind die Datenpakete D der verschiedenen Registrierungsteilnehmer 3 oder deren Hash-Werte vergleichbar. Bei der beispielhaften Ausführungsform in Fig. 1 bildet jeder Registrierungsteilnehmer 3 auch einen Hash-Wert von jedem neu erstellten Datenpaket D. Anschließend wird der Hash-Wert noch mittels eines privaten Schlüssels einer PKI des jeweiligen Registrierungsteilnehmers 3 signiert. Schließlich wird mindestens der signierte Hash-Wert von jedem Registrierungsteilnehmer 3 in dem für ihn reservierten Bereich der Feldbuskommunikationseinrichtung 4 abgelegt. Es kann auch das gesamte Datenpaket D in die Feldbuskommunikation geschrieben werden. Für den Vergleich zwischen den Registrierungsteilnehmern 3 genügen aber die Hash-Werte.

Bei der beispielhaften Ausführungsform in Fig. 1 wird der Hash-Wert und/oder das Datenpaket D in einem Echtzeitbereich der Feldbuskommunikationseinrichtung 4 abgelegt, der in Echtzeit übermittelt wird. Jeder Registrierungsteilnehmer 3 liest die Hash-Werte der anderen Registrierungsteilnehmer 3 mit und speichert diese zusammen mit einer aktuellen Information, dem Hash-Wert und der Signatur ab. Anhand der vorhandenen öffentlichen Schlüssel der anderen Registrierungsteilnehmer 3 können die signierten Hash-Werte von jedem Registrierungsteilnehmer 3 auf Echtheit überprüft werden. Jeder Registrierungsteilnehmer 3 überprüft, ob die Hash-Werte sämtlicher Registrierungsteilnehmer 3 übereinstimmen. Dies würde bedeuten, dass die aufgezeichneten Datenpakete D von allen Registrierungsteilnehmern 3 gleich sind. Damit die mitgeschriebenen Fahrzeugdaten bei allen Registrierungsteilnehmern 3 auf dem gleichen Stand sind, ist dieser Zustand wünschenswert.

Solche Registrierungsteilnehmer 3, deren Hash-Werte nicht mit denen von einer qualifizierten Mehrheit der Registrierungsteilnehmer 3 übereinstimmen, werden markiert. Falls sie wiederholt nicht mit der Mehrheit übereinstimmen, können sie beispielsweise ausgeschlossen werden.

Um alle Registrierungsteilnehmer 3 auf den gleichen Datenstand zu halten, ist ferner vorgesehen, dass die Hash-Werte einer qualifizierten Mehrheit der Registrierungsteilnehmer 3 auch für alle anderen Registrierungsteilnehmer 3 übernommen werden. Sollte einmal keine qualifizierte Mehrheit zustande kommen, kann eine Einigung über ein vorbestimmtes Einigungsprotokoll erzielt werden. Dies Protokoll kann beispielsweise bekannte Einigungsalgorithmen verwenden.

In Fig. 3 ist eine Einigung innerhalb der Zyklen der Feldbuskommunikation aus Fig. 2 beispielhaft und schematisch darstellt.

Die Daten werden hier über zwei Intervalle z0, z1 gesammelt. Zykluszeit ist hier wieder z=100 ms. Durch den Pfeil 10 ist dargestellt, dass die Sammlung der Daten und Erstellen des Datenpakets D abgeschlossen ist. In der Regel werden die Daten im nächsten Intervall z2 verifizierbar abgestimmt und gespeichert, wenn die Mehrheit übereinstimmt. Wenn die Zykluszeit z sehr klein ist, kann man auch einen Zyklus Versatz einbauen, z. B. um genügend Zeit für die Berechnungen einzuräumen. Im Ideal-Fall sind die ältesten Daten in Fig. 3 nach z0+z1+z2=300 ms in den Registrierungsteilnehmern 3 verbindlich gespeichert, ggf. mit einer Latenz nach 400 ms. Dies ist durch den Pfeil 11 dargestellt. Wenn direkt keine Einigung erzielt werden konnte, wird der Konsens erst nach (z0+z1+z2+m) ms erreicht, aber falls m<7 wird immer noch eine Latenz von unter 1 s erreicht, was als schnell angesehen werden kann.

## Patentansprüche

1. Verfahren zur Fahrtenregistrierung für eine eisenbahntechnische Anlage,
bei dem gleichzeitig von mehreren Registrierungsteilnehmern (3) jeweils Daten der eisenbahntechnischen Anlage über einen vorbestimmten Zeitraum ausgelesen und jeweils wenigstens ein Datenpaket aus den Daten und/oder wenigstens ein Hash-Wert des Datenpaketes erstellt und abgespeichert werden,
bei dem die Datenpakete und/oder die Hash-Werte jeweils mittels Feldbuskommunikation zwischen den Registrierungsteilnehmern (3) ausgetauscht werden und
die von unterschiedlichen Registrierungsteilnehmern (3) erstellten Datenpakete und/oder deren Hash-Wert miteinander verglichen werden,
**dadurch gekennzeichnet , dass** die Datenpakete und/oder die Hash-Werte verschiedener Registrierungsteilnehmer (3) des gleichen Zeitraums auf Übereinstimmung überprüft werden,
Registrierungsteilnehmer (3), deren Datenpakete und/oder Hash-Werte mit denen der übrigen Registrierungsteilnehmer (3) nicht übereinstimmen, markiert werden und Registrierungsteilnehmer (3) mit wiederholt nicht übereinstimmenden Daten ausgeschlossen werden.

2. Verfahren nach Anspruch 1,
**dadurchgekennzeichnet** , dass das Datenpaket und/oder der Hash-Wert des Datenpaketes von den Registrierungsteilnehmern (3) jeweils signiert werden..

3. Verfahren nach Anspruch 2,
**dadurch gekennzeichnet , dass** das Datenpaket und/oder der Hash-Wert des Datenpaketes von den Registrierungsteilnehmern (3) jeweils mit einem zugeordneten privaten Schlüssel einer PKI - Public-Key-Infrastruktur signiert werden.

4. Verfahren nach einem der oben genannten Ansprüche,
**dadurch gekennzeichnet , dass** eine Einigung durchgeführt wird, wenn die Datenpakete und/oder die Hash-Werte verschiedener Registrierungsteilnehmer (3) des gleichen Zeitraums voneinander abweichen.

5. Verfahren nach Anspruch 4,
**dadurch gekennzeichnet , dass** die Einigung dadurch erzielt wird, dass die Datenpakete und/oder die Hash-Werte einer Mehrheit oder qualifizierten Mehrheit der Registrierungsteilnehmer (3) für alle Registrierungsteilnehmer (3) übernommen werden.

6. Verfahren nach Anspruch 4 oder 5,
**dadurch gekennzeichnet , dass** die Einigung durch ein vorbestimmtes Einigungsprotokoll erzielt wird, das mittels Feldbuskommunikation durchgeführt wird.

7. Verfahren nach einem der oben genannten Ansprüche,
**dadurch gekennzeichnet , dass** die Datenpakete und/oder die Hash-Werte mittels Feldbuskommunikation in Echtzeit ausgetauscht werden.

8. Verfahren nach einem der oben genannten Ansprüche,
**dadurch gekennzeichnet , dass** der vorbestimmte Zeitraum, über den die Daten ausgelesen werden, größer oder gleich einem Übertragungszyklus der Feldbuskommunikation ist.

9. Verfahren nach einem der oben genannten Ansprüche,
**dadurch gekennzeichnet , dass** jedem Registrierungsteilnehmer (3) wenigstens ein Bereich in der Feldbuskommunikation fest zugeordnet wird.

10. Registrierungsteilnehmer (3) für eine Fahrtenregistrierungseinrichtung (2) einer eisenbahntechnischen Anlage,
mit wenigstens einer Ausleseeinrichtung (6), die zum Auslesen von Daten der eisenbahntechnischen Anlage über einen vorbestimmten Zeitraum ausgebildet ist,
mit wenigstens einer Verarbeitungseinrichtung (7), die zum Erstellen und Abspeichern wenigstens eines Datenpaketes aus den Daten und/oder wenigstens eines Hash-Werts des Datenpaketes ausgebildet ist,
mit wenigstens eine Kopplungseinrichtung (8), die zum Austausch der Datenpakete und/oder die Hash-Werte mittels Feldbuskommunikation ausgebildet ist, und
mit wenigstens einer Vergleichseinrichtung (9), die zum Vergleichen der von unterschiedlichen Registrierungsteilnehmern (3) erstellten Datenpaketen und/oder deren Hash-Werten ausgebildet ist,
**dadurch gekennzeichnet, dass** der Registrierungsteilnehmer (3) ausgebildet ist,
die Datenpakete und/oder die Hash-Werte verschiedener Registrierungsteilnehmer (3) des gleichen Zeitraums auf Übereinstimmung zu überprüfen,
Registrierungsteilnehmer (3), deren Datenpakete und/oder Hash-Werte mit denen der übrigen Registrierungsteilnehmer (3) nicht übereinstimmen, zu markieren und Registrierungsteilnehmer (3) mit wiederholt nicht übereinstimmenden Daten auszuschließen.

11. Fahrtenregistrierungseinrichtung (2) für eine eisenbahntechnische Anlage,
mit mehreren Registrierungsteilnehmern, die zum Auslesen von Daten und zum zyklischen Erstellen von Datenpaketen aus den Daten ausgebildet sind,
mit wenigstens einer Feldbuskommunikationseinrichtung (4), durch die die Registrierungsteilnehmer (3) miteinander verbunden sind,
wobei wenigstens einige der Registrierungsteilnehmer (3) gemäß Anspruch 10 ausgebildet sind.

12. Fahrtenregistrierungseinrichtung (2) nach Anspruch 11,
**dadurch gekennzeichnet, dass** die Feldbuskommunikationseinrichtung (4) echtzeitfähig ausgebildet ist.

13. Schienenfahrzeug (1) mit wenigstens einer Fahrtenregistrierungseinrichtung (2) nach Anspruch 11 oder 12.

## Claims

1. Method for registering travel for a rail system,
in which rail system data from a plurality of registration participants (3) is read in each case over a predefined time period and at least one data packet from the data and/or at least one hash value of the data packet is created and stored in each case,
in which the data packets and/or the hash values are exchanged by means of field bus communication between the registration participants (3) in each case and
the data packets created from different registration participants (3) and/or their hash value are compared with one another,
**characterised in that**
the data packets and/or the hash values of different registration participants (3) from the same time period are checked for conformity,
registration participants (3) whose data packets and/or hash values do not conform to those of the remaining registration participants (3) are marked and
registration participants (3) with repeatedly non-conforming data are excluded.

2. Method according to claim 1,
**characterised in that**
the data packet and/or the hash value of the data packet is/are signed by the registration participants (3) in each case.

3. Method according to claim 2,
**characterised in that**
the data packet and/or the hash value of the data packet is/are signed by the registration participants (3) with an associated private key of a PKI - public key infrastructure - in each case.

4. Method according to one of the above-mentioned claims, **characterised in that**
a unification is carried out if the data packets and/or the hash values of different registration participants (3) from the same time period deviate from one another.

5. Method according to claim 4,
**characterised in that**
the unification is achieved **in that** the data packets and/or the hash values of a majority or qualified majority of the registration participants (3) are adopted for all registration participants (3).

6. Method according to claim 4 or 5,
**characterised in that**
the unification is achieved by a predefined unification protocol which is carried out by means of field bus communication.

7. Method according to one of the above-mentioned claims,
**characterised in that**
the data packets and/or the hash values are exchanged in real time by means of field bus communication.

8. Method according to one of the above-mentioned claims, **characterised in that**
the predefined time period, over which the data is read, is greater than or equal to a transfer cycle of the field bus communication.

9. Method according to one of the above-mentioned claims, **characterised in that**
at least one area in the field bus communication is assigned in a fixed manner to each registration participant.

10. Registration participant (3) for a travel registration facility (2) of a rail system,
with at least one read facility (6) which is designed to read rail system data over a predefined time period,
with at least one processing facility (7), which is designed to create and store at least one data packet from the data and/or at least one hash value of the data packet,
with at least one coupling facility (8) which is designed to exchange the data packets and/or the hash values by means of field bus communication and
with at least one comparison facility (9) which is designed to compare data packets created by different registration participants (3) and/or their hash values,
**characterised in that**
the registration participant (3) is designed
to check the data packets and/or the hash values of different registration participants (3) from the same time period for conformity,
to mark registration participants (3), whose data packets and/or hash values do not conform to those of the remaining registration participants (3) and
to exclude registration participants (3) with repeatedly non-conforming data.

11. Travel registration facility (2) for a rail system,
with a plurality of registration participants which are designed to read data and to cyclically create data packets from the data,
with at least one field bus communication facility (4) by way of which the registration participants (3) are connected with one another,
wherein at least some of the registration participants (3) are designed according to claim 10.

12. Travel registration facility (2) according to claim 11,
**characterised in that**
the field bus communication facility (4) is designed to be able to function in real time.

13. Rail vehicle (1) with at least one travel registration facility (2) according to claim 11 or 12.

## Revendications

1. Procédé d'enregistrement de trajets pour une installation de la technique des chemins de fer,
dans lequel en même temps, par plusieurs participants (3) à l'enregistrement, respectivement des données de l'installation de la technique des chemins de fer sont lues sur un laps de temps déterminé à l'avance et respectivement au moins un paquet de données parmi les données et/ou au moins une valeur de Hash du paquet de données sont établis et mis en mémoire,
dans lequel les paquets de données et/ou les valeurs de Hash sont échangés respectivement au moyen d'une communication par bus de champ entre les participants (3) à l'enregistrement et
les paquets de données établis par différents participants (3) à l'enregistrement et/ou leurs valeurs de Hash sont comparés entre eux,
**caractérisé en ce que**
l'on contrôle si les paquets de données et/ou les valeurs de Hash de divers participants (3) à l'enregistrement du même laps de temps coïncident,
on repère des participants (3) à l'enregistrement, dont des paquets de données et/ou des valeurs de Hash ne coïncident pas avec celles des autres participants (3) à l'enregistrement, et
on exclut des participants (3) à l'enregistrement ayant des données, qui, d'une manière répétée, ne coïncident pas.

2. Procédé suivant la revendication 1,
**caractérisé en ce que**
le paquet de données et/ou la valeur de Hash du paquet de données sont signés respectivement par les participants (3) à l'enregistrement.

3. Procédé suivant la revendication 2,
**caractérisé en ce que**
le paquet de données et/ou la valeur de Hash du paquet de données sont signés par les participants (3) à l'enregistrement respectivement par une clé privée associée, d'une PKI-infrastructure à clé publique.

4. Procédé suivant l'une des revendications précédentes, **caractérisé en ce que**
l'on effectue une conciliation si les paquets de données et/ou les valeurs de Hash de divers participants (3) à l'enregistrement du même laps de temps s'écartent les uns des autres.

5. Procédé suivant la revendication 4,
**caractérisé en ce que**
l'on obtient la conciliation par le fait que les paquets de données et/ou les valeurs de Hash d'une majorité ou d'une majorité qualifiée des participants (3) à l'enregistrement sont pris pour tous les participants (3) à l'enregistrement.

6. Procédé suivant la revendication 4 ou 5,
**caractérisé en ce que**
l'on obtient la conciliation par un protocole de conciliation déterminé à l'avance, que l'on effectue au moyen d'une communication par bus de champ.

7. Procédé suivant l'une des revendications précédentes, **caractérisé en ce que**
l'on échange en temps réel les paquets de données et/ou les valeurs de Hash au moyen de la communication par bus de champ.

8. Procédé suivant l'une des revendications précédentes, **caractérisé en ce que**
le laps de temps déterminé à l'avance, sur lequel les données sont lues est supérieur ou égal à un cycle de transmission de la communication par bus de champ.

9. Procédé suivant l'une des revendications précédentes, **caractérisé en ce que**
l'on affecte au moins une partie dans la communication par bus de champ à chaque participant (3) à l'enregistrement.

10. Participant (3) à un enregistrement pour un dispositif (2) d'enregistrement de trajets d'une installation de la technique des chemins de fer,
comprenant au moins un dispositif (6) de lecture, qui est constitué pour la lecture de données de l'installation de la technique des chemins sur un laps de temps déterminé à l'avance,
comprenant au moins un dispositif (7) de traitement, qui est constitué pour l'établissement et la mise en mémoire d'au moins un paquet de données parmi les paquets de données et/ou d'au moins une valeur de Hash du paquet de données,
comprenant au moins un dispositif (8) de couplage, qui est constitué pour l'échange des paquets de données et/ou des valeurs de Hash au moyen d'une communication par bus de champ, comprenant au moins un dispositif (9) de comparaison, qui est constitué pour la comparaison des paquets de données établis par différents participants (3) à l'enregistrement et/ou leurs valeurs de Hash,
**caractérisé en ce que**
le participant (3) à l'enregistrement est constitué,
pour contrôler la coïncidence des paquets de données et/ou des valeurs de champ de divers participants (3) à l'enregistrement du même laps de temps,
pour repérer des participants (3) à l'enregistrement, dont les paquets de données et/ou les valeurs de Hash ne coïncident pas avec celles des autres participants (3) à l'enregistrement, et pour exclure des participants (3) à l'enregistrement ayant, de manière répétée, des données, qui ne coïncident pas.

11. Dispositif (2) d'enregistrement de trajets pour une installation de la technique des chemins de fer,
comprenant plusieurs participants à l'enregistrement, qui sont constitués pour la lecture de données et pour l'établissement cyclique de paquets de données à partir des données,
comprenant au moins un dispositif (4) de communication par bus de champ, par lequel les participants (3) à l'enregistrement sont reliés entre eux,
dans lequel au moins certains des participants (3) à l'enregistrement sont constitués suivant la revendication 10.

12. Dispositif (2) d'enregistrement de trajets suivant la revendication 11,
**caractérisé en ce que**
le dispositif (4) de communication par bus de champ est constitué de manière à pouvoir fonctionner en temps réel.

13. Véhicule (1) ferroviaire comprenant au moins un dispositif (2) d'enregistrement de trajets suivant la revendication 11 ou 12.
